(19) Europäisches Patentamt
European Patent Office
Office européen des brevets

(11) Numéro de publication : **0 166 709**
**B1**

(12) # FASCICULE DE BREVET EUROPÉEN

(45) Date de publication du fascicule du brevet : **02.03.88**

(51) Int. Cl.[4] : **C 22 B 25/06**, C 07 F 7/22

(21) Numéro de dépôt : **85870070.1**

(22) Date de dépôt : **22.05.85**

(54) **Procédé de récupération de l'étain.**

(30) Priorité : **28.05.84 LU 85384**

(43) Date de publication de la demande :
**02.01.86 Bulletin 86/01**

(45) Mention de la délivrance du brevet :
**02.03.88 Bulletin 88/09**

(84) Etats contractants désignés :
**BE CH DE FR GB IT LI**

(56) Documents cités :
**EP-A- 0 023 729**
**FR-A- 588 302**
**FR-A- 813 460**
**FR-A- 2 182 231**
**US-A- 2 200 782**

(73) Titulaire : **TESSENDERLO CHEMIE N.V.**
**B-3980 Tessenderlo (BE)**

(72) Inventeur : **Peerts, Fernand**
**96, Diestse steenweg**
**B-3220 Aarschot (BE)**
Inventeur : **Loosen, Pierre**
**5, Geelsebaan**
**B-3980 Tessenderlo (BE)**
Inventeur : **Mahieu, Bernard**
**24, rue de la Ferme du Coq**
**B-1490 Court St. Etienne (BE)**

(74) Mandataire : **De Palmenaer, Roger et al**
**Bureau Vander Haeghen 63, avenue de la Toison d'Or**
**B-1060 Bruxelles (BE)**

**EP 0 166 709 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention est relative à un procédé de récupération de l'étain à partir de rebuts étamés ou contenant de l'étain.

Les matériaux susceptibles d'être traités doivent contenir l'étain sous forme métallique. Un exemple typique est le fer-blanc, provenant soit de rebuts de fabrication, soit d'un processus de recyclage de boîtes à conserves. Un autre exemple est le cuivre ou le laiton étamés qui sont utilisés dans l'industrie électrique et électronique.

D'autres matériaux sont utilisables mais si l'étain s'y trouve sous forme oxydée, il doit nécessairement subir une réduction pour être ramené à l'état métallique. Dans cette catégorie peuvent se ranger les déchets provenant des incinérateurs d'ordures ménagères (cendres volantes), les boues d'électrolyse et d'autres résidus industriels pulvérulents contenant de l'étain.

Des minerais trop pauvres pour que l'étain en soit extrait par réduction suivie de coulée du métal sont aussi susceptibles d'être traités par la méthode ici décrite.

Selon un procédé connu, la récupération de la mitraille d'étain est effectuée par un traitement au chlore, qui fournit le tétrachlorure d'étain, $SnCl_4$, matière de base ou catalyseur dans de nombreux procédés chimiques.

On connaît également par la demande de brevet français n° 2 182 231, un procédé de préparation de composés organiques halogénés d'alkyl-étain à chaîne droite ou ramifiée ou d'aryl-étain répondant à la formule :

$$R_mSnX_{4-m}$$

qui consiste à faire réagir un halogénure organique d'alkyle, aryle, aralkyle ou alcényle de formule RX, par exemple du type chlorure de benzyle, avec de l'étain métallique en présence d'un mélange d'un composé phosphoré et d'un composé d'amine, de brome ou d'iode, en présence d'un solvant.

Ce procédé connu a principalement pour but la préparation de composés organo-métalliques d'étain qu servent d'intermédiaires importants, notamment dans la fabrication de stabilisants.

Enfin, on connaît également un troisième procédé, industriellement appliqué. Celui-ci fait appel à l'électrolyse en milieu basique. Ce procédé fournit le métal.

La présente invention propose une voie directe qui transformerait la mitraille d'étain en un dérivé organométallique susceptible d'être isolé et modifié ultérieurement selon une des méthodes décrites ci-après.

Elle concerne un procédé de récupération de l'étain à partir de rebuts étamés ou contenant de l'étain, caractérisé en ce qu'après réduction de ceux-ci lorsque l'étain ne s'y trouve pas sous forme métallique, on les traite avec du chlorure de benzyle en vue de réaliser en milieu liquide en présence d'un solvant, la transformation sélective de l'étain en un composé de di-benzyldichloroétain et/ou tri-benzylmonochloroétain soluble dans le milieu réactionnel.

Suivant une particularité de l'invention, on synthétise préférentiellement le dibenzyldichloroétain que l'on sépare, après élimination du solvant, par cristallisation suivie de filtration.

Une seconde méthode de séparation consiste à transformer le dérivé organostannique en oxyde de dibenzylétain par précipitation au moyen d'un agent basique.

D'autres particularités et détails de l'invention apparaîtront au cours de la description détaillée suivante d'un mode de mise en œuvre de l'invention et qui fait référence au dessins ci-joint, montrant le schéma de principe des diverses réactions à mettre en œuvre pour récupérer l'étain des rebuts de fer-blanc.

La transformation sélective de l'étain en un composé organostannique se déroule en milieu liquide, en présence d'un solvant, selon une des équations stoechiométriques suivantes :

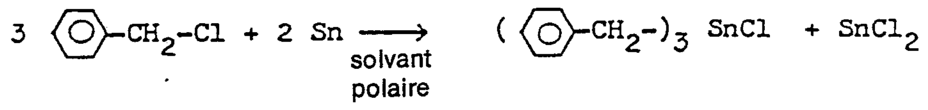


(I)

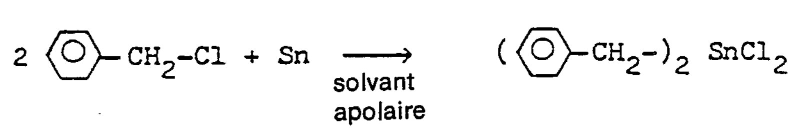


(II)

Le solvant communément utilisé pour favoriser la réaction (II) est le toluène, mais une bonne dissolution de l'étain en dibenzyldichloroétain est aussi obtenue en présence d'autres hydrocarbures (xylène) ou d'hydrocarbures halogénés (chlorobenzène).

Comme illustré au schéma, le réacteur désigné dans son ensemble par la notation de référence 1 consiste en une cuve émaillée 2 à double paroi 2', muni d'une large ouverture 3 à la partie supérieure et d'un robinet de vidange 4 à la partie inférieure. Le réacteur 1 comporte divers accessoires, notamment un réfrigérant 6. Une pompe 7 assure l'homogénéisation dans le réacteur 1.

On introduit dans le réacteur 1, un panier métallique 8 dont l'écartement entre les mailles est fonction de la nature des déchets et qui contient la charge 9 à désétamer. Ce panier est destiné à faciliter l'immersion et le retrait de celle-ci sans devoir vidanger le réacteur.

On introduit ou ajoute éventuellement du chlorure de benzyle et éventuellement du solvant et on porte le réacteur à la température de reflux. On y adjoint éventuellement une partie du résidu de la distillation ultérieure du solvant. Le chauffage du réacteur est assuré par une circulation d'huile ou de vapeur dans la double paroi 2'.

Une élévation de température influence favorablement la vitesse de réaction. A la pression atmosphérique, les meilleurs résultats sont obtenus à la température d'ébullition du solvant (113 °C pour le toluène), sous pression à une température supérieure au point d'ébullition permet d'augmenter la vitesse.

La concentration en chlorure de benzyle influence la vitesse de réaction, dans le domaine étudié, de 0,12 à 2,16 moles/litre, la vitesse est directement proportionnelle à la concentration en chlorure de benzyle.

Cependant, pour le désétamage du fer-blanc, il est déconseillé de dépasser la valeur de 0,5 mole/litre, sous peine d'observer un début d'attaque du fer.

On ajoute éventuellement un catalyseur, tel le $SnCl_4$, qui favorise la réaction de l'étain avec le chlorure de benzyle.

En l'absence de catalyseur, une période d'induction, éventuellement fort longue, peut être observée lorsque les réactifs purs sont mis en présence seuls. L'adjonction d'un produit de réaction, par exemple de dibenzyldichlorétain au mélange de toluène et de chlorure de benzyle, supprime la période d'induction et exerce en tant qu'autocatalyseur, un effet positif sur la vitesse de réaction.

Il se forme un organoétain constitué principalement de dibenzyldichloroétain soluble dans le milieu réactionnel. Pour le récupérer, on soutire en 4 du liquide en continu et on le soumet à une distillation dans un appareil désigné dans un ensemble par la notation de référence 10. Le toluène constitue la fraction volatile 11 et est renvoyé dans le bain de désétamage, tandis que la fraction lourde 12, composée de chlorure de benzyle et de dibenzyldichlororétain dissous est régulièrement retirée de l'appareil de distillation 10.

Cette fraction lourde 12 est, soit soumise à une cristallisation fractionnée, soit traitée par une solution aqueuse basique en vue d'hydrolyser le dichloroétain.

La cristallisation fractionnée permet, par refroidissement dans un échangeur à vis 13, de former des cristaux de dibenzyldichloroétain qu'on laisse décanter dans une cuve 14 et qu'on sépare tel quel par filtration dans un filtre à presse 15.

Le gâteau de dibenzyldichloroétain 16 constitue un dérivé organométallique susceptible d'être utilisé tel quel en phytopharmacie et dans la production des matières plastiques, mais il n'acquiert une réelle valeur marchande que par quelques transformations ultérieures.

Un des traitements préconisés consiste en une hydrolyse effectuée dans un réacteur à cuve 17 muni d'un agitateur 18 et d'un réfrigérant 19. Le dibenzyldichloroétain y est transformé en oxyde de dibenzylétain de formule

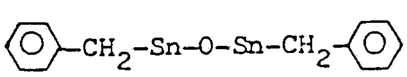

tandis que le chlorure de benzyle non consommé est converti en alcool benzylique. L'oxyde de dibenzyldichloroétain précipite en une poudre fine dans le mélange susdit. On le sépare par filtration en 20 et on récupère l'alcool benzylique du filtrat 21 par rectification en 22. On lave le gâteau d'oxyde de dibenzylétain 23 éventuellement à l'eau.

L'oxyde de dibenzylétain est un bon catalyseur pour la polymérisation des résines de type polyester au même titre que l'oxyde de dibutylétain habituellement utilisé.

Un autre traitement destiné à accroître la valeur du dibenzyldichloroétain consiste à la transformer en un dérivé plus recherché, à savoir un dialkyldichloroétain (butyl ou octyl par exemple).

Cette transformation s'effectue avantageusement en deux étapes consécutives :

a) alkylation des fonctions chlorure par un trialkylaluminium ;

b) élimination des groupes benzyle par réaction avec du chlore, de l'acide chlorhydrique gazeux ou un acide carboxylique.

La première étape comprenant la réaction d'alkylation des fonctions chlorure du dibenzyldichloroétain par un trialkylaluminium s'effectue sous atmosphère inerte, de préférence sans solvant, avec l'adjonction de quantités stoechiométriques de NaCl comme complexant.

On introduit dans un réacteur à cuve 24 d'abord du tributylaluminium et du chlorure de sodium, que l'on chauffe à la température de 120 °C pour promouvoir la formation d'un complexe et on ajoute ensuite

le dibenzyldichloroétain qui entre en réaction selon l'équation stoechiométrique suivante :

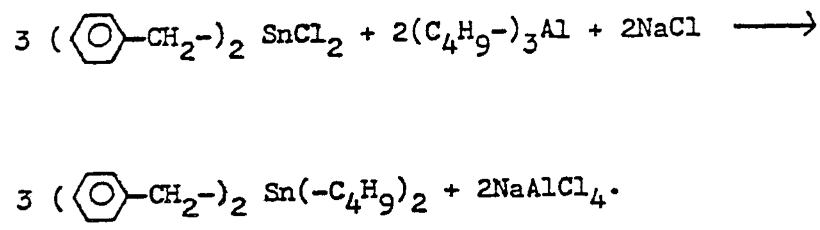

Les résidus de la réaction sont hydrolysés dans un réacteur 25 par un mélange d'acide chlorhydrique dilué (± 0,2 N) et d'un solvant organique (dichlorométhane, éther de pétrole, ...). Après décantation et évaporation du solvant, le dibenzyldibutylétain est recueilli avec une bonne pureté.

L'hydrolyse peut aussi être réalisée par adjonction de chaux éteinte en poudre au contenu du réacteur 24. Une filtration subséquente fournit le dibenzyldibutylétain pur.

La seconde étape consiste à éliminer les substituants benzyle de la molécule de dibenzyldibutylétain. Pour y parvenir, on tire parti de la plus grande labilité desdits substituants benzyle vis-à-vis de certains réactifs, tels que l'acide chlorhydrique gazeux, les acides carboxyliques ou les halogènes. La transformation se résume à une substitution des groupes benzyle par des atomes d'halogène ou des groupements carboxylate selon l'équation suivante :

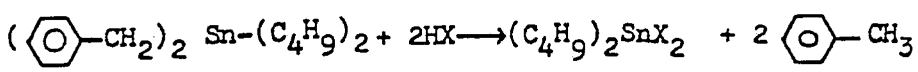

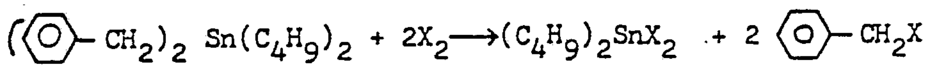

Dans le cas de réactifs gazeux (HCl, $Cl_2$), la transformation s'effectue dans une tour d'absorption 26, le dibenzyldichloroétain étant dilué dans un solvant approprié (toluène avec HCl, tétrachlorure de carbone avec $Cl_2$). Dans le cas de réactifs liquides (acides carboxyliques), la transformation s'effectue dans un réacteur à cuve, sous agitation.

Il est évident que l'invention n'est pas limitée à un seul mode de transformation du dibenzyldichloroétain et que de nombreuses modifications peuvent être apportées au procédé de récupération sans sortir du cadre de l'invention.

Ainsi, fait partie de l'invention, le procédé de transformation du dibenzyldichloroétain en un dérivé minéral par décomposition thermique sous atmosphère contrôlée dans le réacteur 27.

Pour décomposer le dibenzyldichloroétain en $SnCl_2$, il suffit de le soumettre à la température de 200 °C dans une atmosphère d'acide chlorhydrique gazeux. La molécule se scinde en une partie minérale ($SnCl_2$) et une partie organique constituée d'hydrocarbures exempts de chlore.

La séparation et la récupération du dichlorure d'étain anhydre se fait par lavage du résidu de décomposition thermique au moyen d'éther de pétrole. La poudre blanche résiduelle est du $SnCl_2$.

**Revendications**

1. Procédé de récupération de l'étain à partir de rebuts étamés ou contenant de l'étain, caractérisé en ce, qu'après réduction de ceux-ci lorsque l'étain ne s'y trouve pas sous forme métallique, on les traite avec du chlorure de benzyle en vue de réaliser en milieu liquide en présence d'un solvant, la transformation sélective de l'étain en un composé organostannique de dibenzyldichloroétain et/ou tribenzylmonochloroétain soluble dans le milieu réactionnel.

2. Procédé suivant la revendication 1, caractérisé en ce qu'on sépare le composé organostannique, après élimination du solvant, par cristallisation fractionnée sous forme de cristaux de dibenzyldichloroétain qu'on laisse décanter et qu'on sépare par filtration.

3. Procédé suivant la revendication 1, caractérisé en ce qu'on sépare le composé organostannique sous forme d'oxyde de dibenzylétain par précipitation au moyen d'un agent basique.

4. Procédé suivant l'une des revendications 1, 2, et 3, caractérisé en ce qu'on transforme le dérivé organostannique de dibenzylétain en un composé dialkyldibenzylétain par alkylation au moyen de trialkylaluminium et que l'on transforme ce dialkyldibenzylétain en dialkyldichloroétain par élimination des groupes benzyle par chloration au moyen de chlore ou d'acide chlorhydrique gazeux.

5. Procédé suivant l'une des revendications 1 et 2, caractérisé en ce qu'on transforme le composé organostannique de dibenzyldichloroétain en dichlorure d'étain anhydre par décomposition thermique

sous atmosphère d'acide chlorhydrique gazeux.

6. Procédé suivant l'une des revendications 1 à 5, caractérisé en ce que les rebuts traités sont des rebuts industriels de fer-blanc ou d'autres métaux étamés.

## Claims

1. Process for the recovery of tin from tin-plated scrap or scrap containing tin, characterized in that, after reduction of the scrap, when the tin is not present therein in metallic form, the scrap is treated with benzyl chloride for the purpose of carrying out, in liquid medium in the presence of a solvent, the selective conversion of the tin to an organostannic compound comprising dibenzyldichlorotin and/or tribenzylmonochlorotin which is soluble in the reaction medium.

2. Process according to Claim 1, characterized in that the organostannic compound is separated, after removal of the solvent, by fractional crystallization in the from of crystals of dibenzyldichlorotin which are allowed to settle and which are separated by filtration.

3. Process according to Claim 1, characterized in that the organostannic compound is separated in the form of dibenzyltin oxide by precipitation using à basic agent.

4. Process according to one of Claims 1, 2 and 3, characterized in that the organostannic derivative of dibenzyltin is converted to a dialkyldibenzyltin compound by alkylation using trialkylaluminium, and in that this dialkyldibenzyltin is converted to dialkyldichlorotin by removal of the benzyl groups by chlorination using chlorine or gaseous hydrochloric acid.

5. Process according to one of Claims 1 and 2, characterized in that the organostannic compound comprising dibenzyldichlorotin is converted to anhydrous tin dichloride by thermal decomposition under an atmosphere of gaseous hydrochloric acid.

6. Process according to one of Claims 1 to 5, characterized in that the treated scrap is industrial tinplate scrap or industrial scrap of other tin-plated metals.

## Patentansprüche

1. Verfahren zur Rückgewinnung von Zinn aus verzinntem oder zinnenthaltendem Ausschuß, dadurch gekennzeichnet, daß man nach Reduktion desselben, da das Zinn nicht in metallischer Form vorliegt, ihn mit Benzylchlorid versetzt, um in einem flüssigen Milieu in Gegenwart eines Lösungsmittels die selektive Umsetzung des Zinns in eine Organo-Zinnverbindung wie Zinn-dibenzyl-dichlorid und/oder Zinn-tribenzyl-monochlorid, die im Reaktionsmilieu löslich sind, zu bewirken.

2. Verfahren nach Anspruch 1, dadurch gekennzeichnet, daß man die Organo-Zinnverbindung nach Entfernen des Lösungsmittels durch fraktionierte Kristallisation in Form von Zinn-dibenzyl-dichlorid-Kristallen, die man absetzen läßt oder abfilter, abtrennt.

3. Verfahren nach Anspruch 1, dadurch gekennzeichnet, daß man die Organo-Zinnverbindung in Form eines Oxids von Zinn-dibenzyl durch Ausfällen mit einem basischen Agens abtrennt.

4. Verfahren nach einem der Ansprüche 1, 2 und 3, dadurch gekennzeichnet, daß man das Organo-Zinnderivat wie Zinn-dibenzyl in eine Zinn-dialkyl-dibenzyl-Verbindung durch Alkylierung mittels Aluminium-trialkyl umformt und daß man dieses Zinn-dialkyl-dibenzyl in Zinndialkyldichlorid durch Eliminierung der Benzylgruppen durch Chlorierung mittels Chlor oder gasförmiger Chlorwasserstoffsäure umsetzt.

5. Verfahren nach einem der Ansprüche 1 und 2, dadurch gekennzeichnet, daß man die Organo-Zinnverbindung wie Zinn-dibenzyl-dichlorid in das Dichlorid des Zinnanhydrids durch thermische Zersetzung unter Chlorwasserstoffatmosphäre umformt.

6. Verfahren nach einem der Ansprüche 1 bis 5, dadurch gekennzeichnet, daß der zu behandelnde Ausschuß industrieller Ausschuß aus Weißblech oder anderen verzinnten Metallen ist.

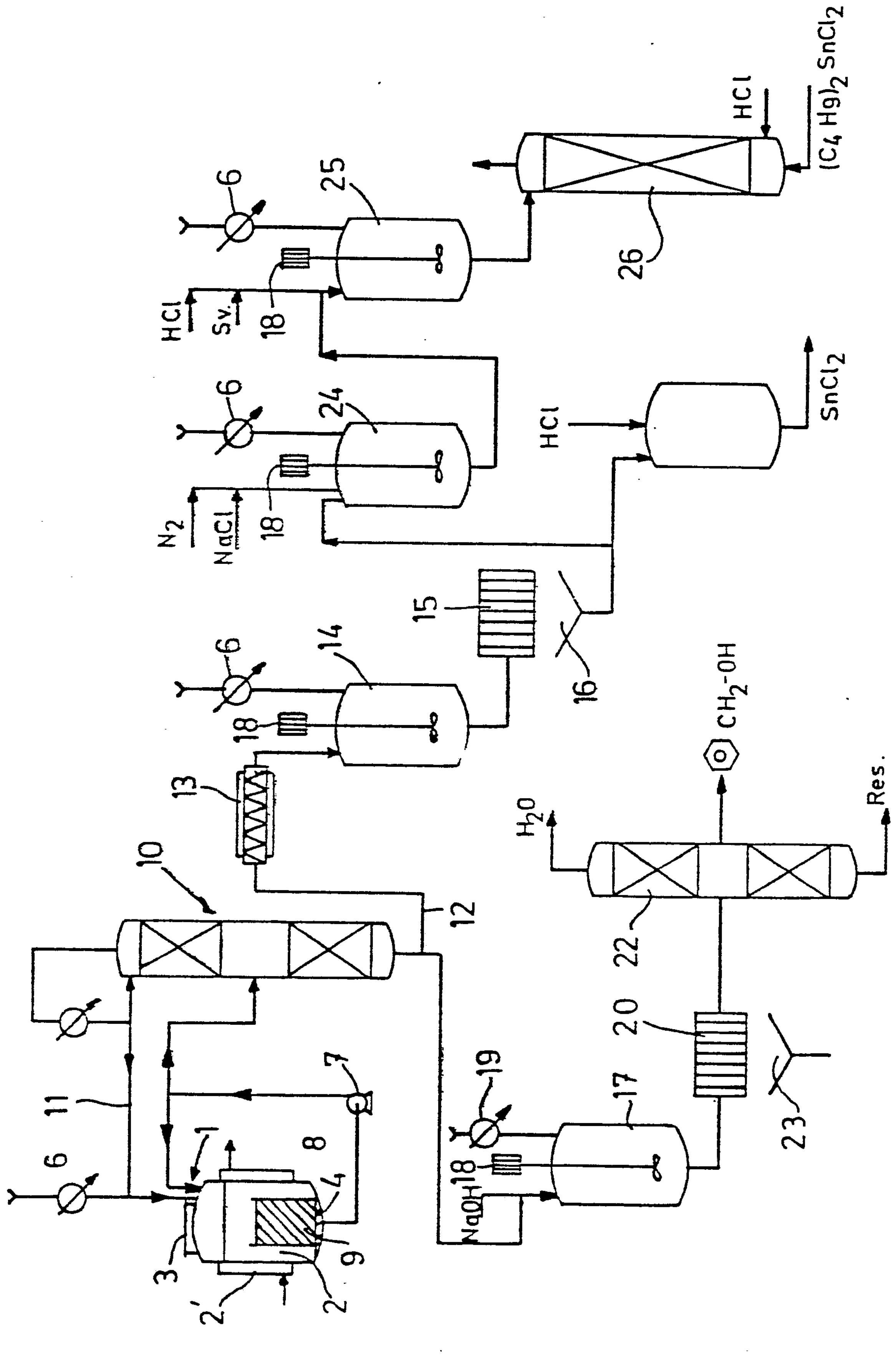
HCl
$(C_4Hg)_2SnCl_2$
26
25
6
18
Sv.
24
$N_2$
NaCl
$SnCl_2$
14
15
16
$CH_2$-OH
13
$H_2O$
Res.
10
12
22
11
7
8
1
4
9
3
2'
2
NaOH
17
18
19
20
23